# EUROPEAN PATENT SPECIFICATION

(11) **EP 1 286 581 B1**
(45) Date of publication and mention of the grant of the patent: **22.06.2005**
(21) Application number: 01934064.5
(22) Date of filing: 16.05.2001
(51) Int. Cl.: A01D 25/04

(54) **LIFTING APPLIANCE OF ROOT PLANTS**
RODEMASCHINE FÜR WURZELGEWÄCHSE
APPAREIL DE LEVAGE DE PLANTS A RACINES

(30) Priority: 16.05.2000 FI 20001176
(43) Date of publication of application: 05.03.2003
(73) Proprietor: Helminen, Jari, 27800 Säkylä (FI)
(72) Inventor: Helminen, Jari, 27800 Säkylä (FI)
(74) Representative: Simmelvuo, Markku
(86) International application number: PCT/FI2001/000481
(87) International publication number: WO 2001/087043

(56) References cited:
- EP-A1- 0 420 349
- DE-A1- 1 507 247
- DE-B1- 2 536 275
- FI-U- 3 807
- DATABASE WPI Week 199437, Derwent Publications Ltd., London, GB; AN 1994-301124, XP002957083 & SU 1 759 284 A (AGRIC MECHN RES INST) 07 September 1992

## Description

The present invention relates to a lifting appliance of root plants. In particular, the invention relates to a novel and.improved ploughshare unit.

### BACKGROUND OF THE INVENTION

Previously known is a ploughshare unit as presented in patent publication FI 3807 U, which will be described in the following section referring to figure 1 which represents the prior art.

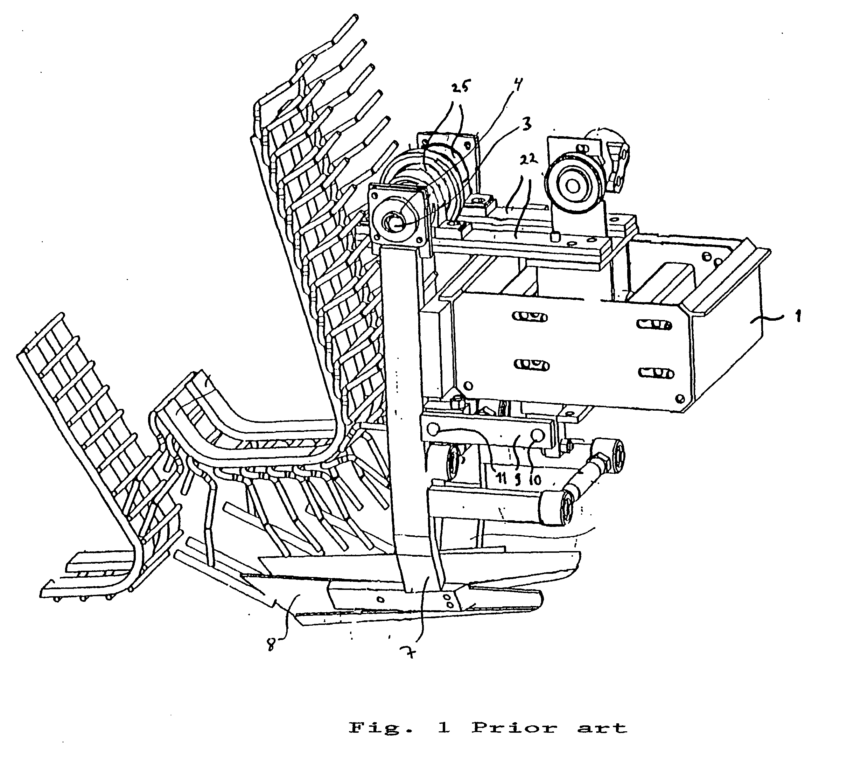

Fig. 1 represents a ploughshare unit which is meant for root plants, specially for sugar beets. In the ploughshare unit there is a mounting frame 1 meant to be mounted on a lifting appliance to be attached to a tractor, a transverse shaft 3 mounted with bearings on the mounting frame 1, transmission devices 5, 6, by means of which the driving apparatus 2 is operationally connected to the transverse shaft 3. In addition, it comprises two wobblers 4 disposed at a distance from one another at the transverse shaft 3, each connected to its own wobbler 4, and a ploughshare arm 7 disposed in a direction substantially downwards, a ploughshare 8 at the lower end of each ploughshare arm 7, and a lever arm 9 pivoted 10, 11 on between the mounting frame 1 and each ploughshare arm 7, in which case the wobblers 4 are disposed in such an angular position in relation to one another that they together with the lever arms 9 bring the ploughshares 8 into an asynchronous stepping motion both in the horizontal and vertical direction to tear up the root plants from the ground.

In the solution as shown in Fig. 1, at least the transverse shaft with its wobblers 4 as well as the ploughshare shafts 7 with their ploughshares 8 are disposed in the mounting frame 1, pivoted on elastic devices 22.

Problems with the previous, and for example with the above-mentioned lifting appliance of root plants, have been many. As is evident from the device as shown in Fig. 1, prior-art devices have many wearing parts. This adds to maintenance costs. In addition, the assembly of the devices has been expensive and cumbersome. The wobbler shaft of the lifting appliance has been subjected to a great twisting force, and a remarkable load has been rested on the transmission between the hydraulic motor and the wobbler shaft. The useful life of these parts is relatively short, they need maintenance, and their replacement causes remarkable costs. In addition, in the prior-art lifting appliances the possibility of adjustment of the stepping motion of the ploughshares has been restricted, and it has not been possible to adjust the stroke gearing, percussion force and stroke length of lifting appliances. Particularly during the lifting, the lacking of the possibility of adjustment of the lifting ploughshares has been a problem.

With the device as shown in Fig. 1 it has been possible to handle one root plant row at a time with the same ploughshare adjustments, and it has not been possible to do any adjustments during the lifting without interrupting the lifting or stopping it.

The objective of the invention is to eliminate the drawbacks referred to above or at least significantly to alleviate them. One specific objective of the invention is to disclose a new type ploughshare unit of a lifting appliance that is more advantageous than the previous ones and more easier to manufacture and maintain and the possibilities of adjustment of which are remarkably more versatile than those of the prior-art ploughshare units.

### BRIEF DESCRIPTION OF THE INVENTION

The present invention relates to a lifting appliance of root plants. In particular, the invention relates to a novel and improved ploughshare unit of a lifting appliance of root plants.

The ploughshare unit of the invention comprises a mounting frame which is mounted on or connected to the lifting appliance of root plants, a ploughshare arm, which is mounted on the mounting frame at least in one point, a lifting ploughshare, which is mounted on the ploughshare arm and pivoted at least in one point and arranged to move in the vertical or horizontal direction. According to the invention, the ploughshare unit comprises a lengthening-shortening type of power unit which is mounted on the ploughshare arm to allow it and the lifting ploughshare to be moved in the vertical direction. The lifting ploughshares are hinged on the ploughshare arms or power units so that the working depth or the lifting angle of the lifting ploughshares can be adjusted. Also other arrangements of connection of the ploughshare arm, ploughshare and power unit are possible. Substantial is that the motion of the ploughshare has been implemented with the aforementioned lengthening-shortening type of power unit. In one embodiment of the invention, the power unit is mounted on the mounting frame, and the power unit is a hydraulic cylinder. The hydraulic cylinder is e.g. a hydraulic cylinder in which there is a cylinder body, piston and piston rod. The body of the hydraulic cylinder is connected to the mounting frame at least in one point, and the moving piston rod of the cylinder is connected to the ploughshare arm.

In one embodiment of the invention, the ploughshare unit has been provided with a control unit which is connected to the hydraulic cylinder. The control unit may be used to control the amounts of the hydraulic liquid of hydraulic cylinders and thus the stroke gearing, percussion force and stroke length of lifting appliances. Hydraulic liquid is pumped into cylinders by means of a separate hydraulic pump. Due to this, the invention solves many a problem of the prior-art ploughshare units. The device is more easier to adjust, easier to maintain and more practicable. The control unit may be a computer or some other corresponding programmable device. In addition, it is possible to connect to the control unit one or more sensors which are used to monitor the operating environment of the ploughshares, such as the hardness of the soil, the number of weeds, the size of the sugar beets to be lifted and other parameters needed in the lifting and specially in the controlling of the motion of the ploughshares. In addition, the sensors may be used to monitor the need for cleaning of the ploughshares and if required, to bring the ploughshares into a "shaking" motion to detach the overage material accumulated in them.

In addition, the control unit comprises a stroke adjuster which is used to adjust the stroke length of the hydraulic cylinder and thus the working depth of the lifting ploughshares. The stroke length is 25-40 mm e.g. in the lifting of sugar beet, but other stroke lengths may also be used. The control unit also comprises a force adjuster which is used to adjust the force and velocity of the impact of the cylinder. This is an important possibility of adjustment which makes it possible to adjust the lifting ploughshares according to the soil and planting distance of the root plants. The control unit also comprises a switch which is used to change the direction of motion of the lifting ploughshares either electrically or by subjection to pressure or by mechanical flow. The switch enables one to control the operation of the stroke adjuster and force adjuster. One has to be able to change the direction of motion of the lifting ploughshares during the lifting, because the planting depth, lifting conditions etc., may vary. In addition, the form and composition of the planting area may change. In addition, we would like to point out that it is possible to adjust the ploughshare and the power unit separately so that the motion of the pair of ploughshares does not have an influence on the adjustment.

In one embodiment of the invention, the ploughshare unit comprises a second power unit, which is a hydraulic cylinder of the kind mentioned above. This may be used for the producing of the motion of the second ploughshare of the pair of ploughshares, in which case both ploughshares have their own power unit. This is one of the most advantageous embodiments of the invention and enables the aforementioned ploughshare-specific adjustment. In one embodiment of the invention there is a set of pairs of ploughshares arranged in the ploughshare unit that comprises four ploughshare arms that are connected to four lifting ploughshares. Between the ploughshare arm and the lifting ploughshare there is a swivel, and the lifting ploughshares are so arranged in the system that the angle of gradient and the distance between the lifting ploughshares is optimal according to the size of the root plant to be lifted. In addition, there are in the pair of ploughshares four hydraulic cylinders that are connected to four ploughshare arms, and by means of two control units the effect of their force is so adjusted that the lifting ploughshares are brought into a stepping motion upwards and downwards.

In one embodiment of the invention, the hydraulic cylinders of the pairs of ploughshares are so cross-connected that the filling of the first hydraulic cylinder is the exhaust of the second hydraulic cylinder and vice versa, in which case the lifting ploughshares connected to the hydraulic cylinders are moving in opposite phases with respect to one another. Hydraulic liquid is fed into the hydraulic cylinders in two points, and the pressure is controlled by means of the control unit. The ploughshare unit may also comprise several pairs of ploughshares of the kind mentioned above.

As compared to prior art, the present invention enables one to implement a new kind of ploughshare unit of a lifting appliance of root plants whose building and maintenance costs are lower than before and whose operation can be controlled and adjusted in a more versatile way than in the prior-art ploughshare units.

### BRIEF DESCRIPTION OF THE DRAWINGS

In the following section, the invention will be described by the aid of a few examples of its embodiments with the reference to the accompanying drawing, in which
Fig. 1 is a perspective view illustrating a prior-art ploughshare unit and the' lower part of the lifting conveyor of the lifting appliance;
Fig. 2 represents one advantageous device in accordance with the invention; and
Fig. 3 represents one part of the device in accordance with the invention.

### DETAILED DESCRIPTION OF THE INVENTION

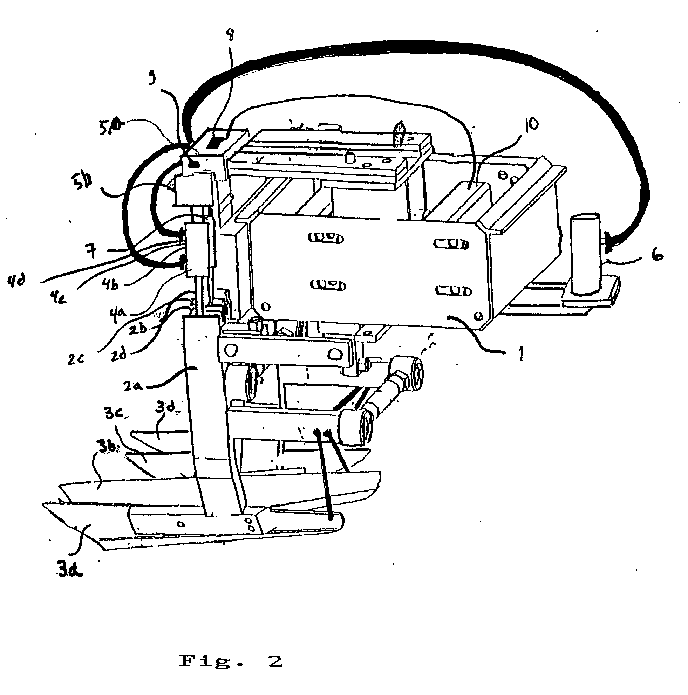

The ploughshare unit as shown in Fig. 2 comprises a mounting frame 1 which is mounted on the lifting device (not shown), ploughshare arms 2a, 2b, 2c and 2d, which are mounted on the mounting frame at least in one point, and lifting ploughshares 3a, 3b, 3c and 3d, which are connected to the ploughshare arms 2a, 2b, 2c and 2d. The lifting ploughshares are swivelled at least in one point and so arranged that they move in the vertical direction and mounted on the mounting frame 1 at least in one point.

The ploughshare unit as shown in Fig. 2 comprises lengthening-shortening types of power units 4a, 4b, 4c and 4d, which are connected to the ploughshare arms 2a, 2b, 2c and 2d to allow the ploughshare arms and lifting ploughshares 3a, 3b, 3c and 3d to be moved in the vertical direction. In the device in accordance with the invention the power units 4a, 4b, 4c and 4d are advantageously hydraulic cylinders, whose operating substance is hydraulic liquid. The hydraulic cylinders 4a, 4b, 4c and 4d are connected to the mounting frame 1 at one end and at the other end to the ploughshare arms 2a, 2b, 2c, and 2d. The hydraulic cylinders 4a, 4b, 4c and 4d are disposed in a position oblique with respect to one another.

In the device in accordance with the invention, hydraulic liquid is pumped into the hydraulic cylinders 4a, 4b, 4c and 4d by means of a pump 6. The hydraulic liquid is conveyed by means of the pump 6 along separate pipes via the control units 5a and 5b to the hydraulic cylinders 4a, 4b, 4c and 4d.

By means of the control units 5a and 5b belonging to the equipment in accordance with the invention, the operation of the hydraulic cylinders 4a, 4b, 4c and 4d is controlled. In the control units 5a and 5b there is arranged at least one force adjuster 9 which is used to adjust the force of impact and velocity of the hydraulic cylinders 4a, 4b, 4c and 4d, and at least one stroke adjuster 8 which is used to adjust the stroke length of the hydraulic cylinders 4a, 4b, 4c and 4d. The control unit 5a comprises at least one switch 10 which is used to change the direction of motion of the lifting ploughshares 3a, 3b, 3c and 3d, either electrically or by subjection to pressure or by mechanical flow. The control unit may also comprise a computer or some other programmable logic unit or similar that enables one to control the operation of the hydraulic cylinders using valves or other devices.

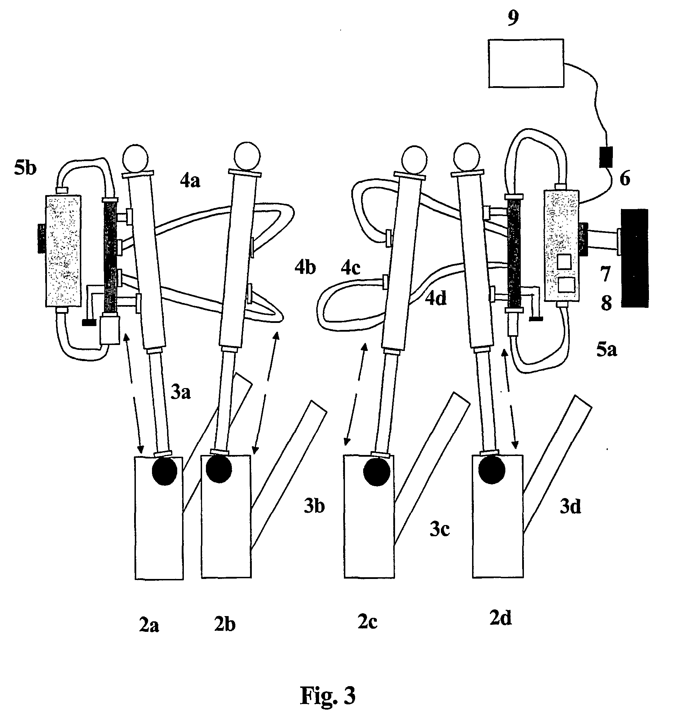

Fig. 3 represents one advantageous view of the device in accordance with the invention in more detail. In the ploughshare unit as shown in Fig. 3 there are pairs of ploughshares arranged. One pair of ploughshares comprises two ploughshare arms 2a and 2b, which are connected to two lifting ploughshares 3a and 3b; two hydraulic cylinders 4a and 4b, which are correspondingly connected to the aforementioned ploughshare arms; at least two control units 5a and 5b, which are used to control the pairs of hydraulic cylinders. In the system as shown in Fig. 3, hydraulic liquid is pumped by means of the pump 6 into the hydraulic cylinders that are cross-connected. In the cross-connection, the filling of the first hydraulic cylinder is achieved by leading the exhaust of the second cylinder into the first cylinder. This enables one to achieve the stepping motion of the lifting ploughshares 3a, 3b, 3c and 3d, in which case the root plants are torn up from the ground very efficiently. The course is described in Fig. 3 by means of arrows parallel with the hydraulic cylinders 4a, 4b, 4c and 4d. In each one of the pairs of ploughshares, one lifting ploughshare moves downwards, and the other one upwards.

The control units 5a and 5b enable one to adjust the amount of the hydraulic liquid to be fed and exhausted between the cross-connected first hydraulic cylinder and second hydraulic cylinder. The stroke length is adjusted by means of the stroke adjuster 7 of the control unit 5a, and the force and velocity by the force adjuster 8. Herein it is also pointed out that it is totally possible to control the hydraulic cylinder independent of the motion of the opposite pair, in which case in one pair of ploughshares, separate ploughshares may move at a totally different pace independent of one another.

In the system in accordance with the invention, the hydraulic cylinders 4a, 4b, 4c and 4d enable one to achieve a shaking impact, and during the lifting it is possible to adjust the driving speed independent of the vertical motion of the ploughshares and vice versa. The hydraulic cylinders 4a, 4b, 4c and 4d are carefully sealed in order that dust or other substances hindering the operation would not get in between the cylinder body and cylinder piston. Also the condensation of the system is so arranged that the heat energy resulting during the operation does not cause problems to the operation of the equipment.

The invention is not restricted merely to examples of its embodiments, instead many variations are possible within the scope of the inventive idea defined by the claims.

## Claims

1. A ploughshare unit to be connected to a lifting appliance of root plants, in which ploughshare unit there is:
a mounting frame (1) which is mounted on the lifting appliance;
a ploughshare arm (2) which is mounted on the mounting frame at least in one point;
a lifting ploughshare (3) which is connected to the ploughshare arm (2) and pivoted at least in one point and arranged to move in the vertical direction, **characterized in that** the ploughshare unit comprises:
a lengthening-shortening type of power unit (4), which is mounted on the ploughshare arm (2) to allow it and the lifting ploughshare (3) to be moved in the vertical direction.

2. The ploughshare unit according to claim 1, **characterized in tha**t the aforementioned power unit is connected to the mounting frame (1).

3. The ploughshare unit according to claim 1 or 2, **characterized in that** the aforementioned power unit (4) is a hydraulic cylinder.

4. The ploughshare unit according to claim 1, 2 or 3, **characterized in that** the ploughshare unit comprises a control unit (5) which is connected to the hydraulic cylinder (4) to allow it to be controlled.

5. The ploughshare unit according to claim 4, **characterized in that** the ploughshare unit comprises a hydraulic pump (6) which is connected to the hydraulic cylinder and control unit (5) and which is used to feed a necessary amount of hydraulic liquid into the hydraulic cylinder.

6. The ploughshare unit according to claim 4 or 5, **characterized in that** the hydraulic cylinders are so cross-connected that in the cross connection, the filling of the first hydraulic cylinder is achieved by leading the exhaust of the second hydraulic cylinder into the first hydraulic cylinder and vice versa, in which case the lifting ploughshares connected to the hydraulic cylinders move in opposite phases.

7. The ploughshare unit according to claim 4, **characterized in that** the control unit (5) comprises a stroke adjuster (7) which is used to control the stroke length of the hydraulic cylinder.

8. The ploughshare unit according to claim 4, **characterized in that** the control unit (5) comprises a force adjuster (8) which is used to adjust the force of impact and velocity of the hydraulic cylinder.

9. The ploughshare unit according to claim 4, **characterized in that** the control unit (5) comprises a switch (9) which is used to change the direction of motion of the lifting ploughshare either electrically, by subjection to pressure or by mechanical flow.

10. The ploughshare unit according to claim 1, 2, 3, 4, 5, 6, 7, 8, or 9, **characterized**
**in that** one pair of ploughshares comprises:
two ploughshare arms (2) which are connected to two lifting ploughshares (3)
two hydraulic cylinders which are connected to two ploughshare arms (2); and
two control units (5) which are used to control the pair of hydraulic cylinders.

11. The ploughshare unit according to claim 1, 2, 3, 4, 5, 6, 7, 8, 9 or 10, **characterized in that** one ploughshare unit comprises several pairs of ploughshares.

## Patentansprüche

1. Pflugschareinheit zur Verbindung mit einer Hebevorrichtung für Wurzelgewächse, wobei die Pflugschareinheit Folgendes aufweist:
einen Montagerahmen (2), der an der Hebevorrichtung angebracht ist;
einen Pflugschararm (2), der wenigstens an einer Stelle an dem Montagerahmen angebracht ist;
eine Hebe-Pflugschar (3), die mit dem Pflugschararm (2) verbunden ist und an wenigstens einer Stelle gelenkig angebracht ist und dazu ausgebildet ist, sich in Vertikalrichtung zu bewegen,
**dadurch gekennzeichnet, dass** die Pflugschareinheit Folgendes aufweist:
eine Aus- und Einfahr-Krafteinheit (4), die an dem Pflugschararm (2) angebracht ist, um eine Bewegung von diesem sowie der Hebe-Pflugschar (3) in Vertikalrichtung zu ermöglichen.

2. Pflugschareinheit nach Anspruch 1,
**dadurch gekennzeichnet, dass** die genannte Krafteinheit (4) mit dem Montagerahmen (1) verbunden ist.

3. Pflugschareinheit nach Anspruch 1 oder 2,
**dadurch gekennzeichnet, dass** es sich bei der genannten Krafteinheit (4) um einen Hydraulikzylinder handelt.

4. Pflugschareinheit nach Anspruch 1, 2 oder 3,
**dadurch gekennzeichnet, dass** die Pflugschareinheit eine Steuereinheit (5) aufweist, die mit dem Hydraulikzylinder (4) verbunden ist, um eine Steuerung von diesem zu ermöglichen.

5. Pflugschareinheit nach Anspruch 4,
**dadurch gekennzeichnet, dass** die Pflugschareinheit eine Hydraulikpumpe (6) aufweist, die mit dem Hydraulikzylinder und der Steuereinheit (5) verbunden ist und die zum Zuführen einer erforderlichen Menge an Hydraulikflüssigkeit in den Zylinder verwendet wird.

6. Pflugschareinheit nach Anspruch 4 oder 5,
**dadurch gekennzeichnet, dass** die Hydraulikzylinder derart überkreuz verbunden sind, dass in der Überkreuz-Verbindung das Füllen des ersten Hydraulikzylinders durch Leiten der Austrittsflüssigkeit von dem zweiten Hydraulikzylinder in den ersten Hydraulikzylinder und umgekehrt erfolgt, wobei sich die mit den Hydraulikzylindern verbundenen Hebe-Pflugscharen dabei gegenphasig bewegen.

7. Pflugschareinheit nach Anspruch 4
**dadurch gekennzeichnet, dass** die Steuereinheit (5) eine Hub-Einstelleinrichtung (7) aufweist, die zum Steuern der Hublänge des Hydraulikzylinders verwendet wird.

8. Pflugschareinheit nach Anspruch 4,
**dadurch gekennzeichnet, dass** die Steuereinheit (5) eine Kraft-Einstelleinrichtung (8) aufweist, der zum Einstellen der Aufprallkraft und der Geschwindigkeit des Hydraulikzylinders verwendet wird.

9. Pflugschareinheit nach Anspruch 4,
**dadurch gekennzeichnet, dass** die Steuereinheit (5) einen Schalter (9) aufweist, der zum Ändern der Bewegungsrichtung der Hebe-Pflugschar entweder in elektrischer Weise, durch Druck oder durch mechanische Mittel verwendet wird.

10. Pflugschareinheit nach Anspruch 1, 2, 3, 4, 5, 6, 7, 8 oder 9,
**dadurch gekennzeichnet, dass** ein Pflugschar-Paar Folgendes aufweist:
zwei Pflugschararme (2), die mit zwei Hebe-Pflugscharen (3) verbunden sind;
zwei Hydraulikzylinder, die mit zwei Pflugschararmen (2) verbunden sind; und
zwei Steuereinheiten (5), die zum Steuern des Paares von Hydraulikzylindern verwendet werden.

11. Pflugschareinheit nach Anspruch 1, 2, 3, 4, 5, 6, 7, 8, 9, oder 10,
**dadurch gekennzeichnet, dass** eine Pflugschareinheit mehrere Pflugschar-Paare aufweist.

## Revendications

1. Unité de soc à relier à un appareil de levage de plantes à racines, dans laquelle unité de soc comprend :
un châssis de montage (1) qui est monté sur l'appareil de levage ;
un bras (2) de soc qui est monté sur le châssis de montage au moins sur un point ;
un soc relevable (3) qui est relié au bras (2) de soc et mis en rotation sur au moins un point et agencé pour se déplacer dans la direction verticale, **caractérisée en ce que** l'unité de soc comprend :
un groupe moteur (4) de type à allongement-raccourcissement, qui est monté sur le bras (2) de soc afin de lui permettre ainsi qu'au soc relevable (3) de se déplacer dans la direction verticale.

2. Unité de soc selon la revendication 1, **caractérisée en ce que** le groupe moteur susmentionné est relié au châssis de montage (1).

3. Unité de soc selon la revendication 1 ou 2,
**caractérisée en ce que** le groupe moteur (4) susmentionné est un cylindre hydraulique.

4. Unité de soc selon la revendication 1, 2 ou 3, **caractérisé en ce que** l'unité de soc comprend une unité de commande (5) qui est reliée au cylindre hydraulique (4) afin de lui permettre d'être commandé.

5. Unité de soc selon la revendication 4, **caractérisée en ce que** l'unité de soc comprend une pompe hydraulique (6) qui est reliée au cylindre hydraulique et à l'unité de commande (5) et qui est utilisée pour introduire une quantité nécessaire de liquide hydraulique dans le cylindre hydraulique.

6. Unité de soc selon la revendication 4 ou 5, **caractérisée en ce que** les cylindres hydrauliques sont interconnectés de telle sorte que lors de l'interconnexion, le remplissage du premier cylindre hydraulique est obtenu en amenant l'échappement du second cylindre hydraulique dans le premier cylindre hydraulique et vice et versa, auquel cas les socs relevables reliés aux cylindres hydrauliques se déplacent dans des phases opposées.

7. Unité de soc selon la revendication 4, **caractérisée en ce que** l'unité de commande (5) comprend un dispositif de réglage de course (7) qui est utilisé pour régler la longueur de la course du cylindre hydraulique.

8. Unité de soc selon la revendication 4, **caractérisée en ce que** l'unité de commande (5) comprend un dispositif de réglage de force (8) qui est utilisé pour régler la force de l'impact et de la vitesse du cylindre hydraulique.

9. unité de soc selon la revendication 4, **caractérisée en ce que** l'unité de commande (5) comprend un commutateur (9) qui est utilisé pour changer la direction du mouvement du soc relevable soit électriquement, en le soumettant à une pression soit par le biais d'un écoulement mécanique.

10. Unité de soc selon la revendication 1, 2, 3, 4, 5, 6, 7, 8 ou 9, **caractérisée en ce qu'**une paire de socs comprend :
deux bras (2) de soc qui sont reliés à deux socs relevables (3)
deux cylindres hydrauliques qui sont reliés à deux bras (2) de soc ; et
deux unités de commande (5) qui sont utilisées pour commander la paire de cylindres hydrauliques.

11. Unité de soc selon la revendication 1, 2, 3, 4, 5, 6, 7, 8, 9 ou 10, **caractérisée en ce qu'**une unité de soc comprend plusieurs paires de socs.
